Europäisches Patentamt

European Patent Office

Office européen des brevets

(11) Publication number: **0 453 665 A1**

## EUROPEAN PATENT APPLICATION

(21) Application number: **90304324.8**

(22) Date of filing: **23.04.90**

(51) Int. Cl.⁵: **H04N 17/04**

The title of the invention has been amended (Guidelines for Examination in the EPO, A-III, 7.3).

(43) Date of publication of application:
**30.10.91 Bulletin 91/44**

(84) Designated Contracting States:
**DE FR GB IT**

(71) Applicant: **International Business Machines Corporation**
**Old Orchard Road**
**Armonk, N.Y. 10504(US)**

(72) Inventor: **Miller, Ian**
**15 Crawfurds View, Lochwinnoch**
**Renfrewshire, Scotland PA12 4EJ(GB)**
Inventor: **Macdonald, Alan**
**6 Harelaw Avenue**
**Glasgow, Scotland(GB)**

(74) Representative: **Killgren, Neil Arthur et al**
**IBM United Kingdom Limited Intellectual Property Department Hursley Park Winchester Hampshire SO21 2JN(GB)**

(54) **Image alignment apparatus for cathode ray tube display devices.**

(57) Apparatus for image alignment in cathode ray tube display devices, the apparatus having light detectors arranged such that light from the cathode ray tube screen impinges on them and which provide objective, rather than subjective, data regarding the position of features of the image which data may be used to calculate the necessary adjustments to the cathode ray tube in order that it be correctly aligned.

FIG. 4

EP 0 453 665 A1

The invention relates to apparatus for image alignment in cathode ray tube display devices.

The conventional method of image alignment in cathode ray tube display devices, such as monitors for data processing systems and television receivers, comprises generating a test pattern on the cathode ray tube screen, including at least one image feature, overlaying a mask on the screen and manually adjusting the image until the image feature falls within specified limits for its correct position marked on the overlay mask.

This manual adjustment has the disadvantages firstly of being subjective and secondly of being a difficult, time-consuming task. It is therefore an object of the present invention to provide a method by which this process may be made objective, rather than subjective, thereby allowing the process to be wholly or partly automated.

Therefore according to the present invention there is provided apparatus for image alignment in cathode ray tube display devices, the apparatus comprising; at least one light detector; support structure for locating each light detector such that light from a corresponding predetermined screen location is incident thereon; each light detector producing a signal indicative of an image feature when the image feature is displayed at the predetermined screen location corresponding to the light detector. Such apparatus provides objective, electronic data regarding the position of image features on the screen.

According to a preferred feature of the invention the apparatus includes a plurality of light detectors arranged to receive light from at least one linear array of predetermined screen locations, the linear array of screen locations being substantially perpendicular to an edge of the screen. In this way the apparatus may be used to detect features located at the edges of the image.

According to another preferred feature of the invention the apparatus includes a plurality of light detectors arranged to receive light from at least one two-dimensional array of predetermined screen locations at or adjacent a corner of the screen. The apparatus may thereby be used to detect features located at the corners of the image.

According to a preferred feature of the invention the support structure comprises a sheet carrying said light detectors and means for locating the sheet in a predetermined disposition with respect to the cathode ray tube screen. The apparatus thereby forms a mask which may be mounted over the cathode ray tube screen with the light detectors receiving light directly from the screen.

According to another preferred feature of the invention the sheet is transparent and partially reflective thereby allowing an operator to see the image features, but reducing interference from ambient light.

According to another preferred feature of the invention the sheet further has marks thereon for initial approximate alignment of said image feature. In this way an approximate manual pre-alignment may be performed.

According to another preferred feature of the invention the apparatus further comprises; means for controlling said cathode ray tube display device to display image features which image features are intended for display at specific screen locations; means for receiving and responding to the signals given by the light detectors to determine from the signals screen location information for the displayed image features. A pattern is displayed which should, on a correctly aligned cathode ray tube display device, be displayed at the specific locations. The actual position of the pattern is measured by the light detectors.

According to another preferred feature of the invention the apparatus further comprises: means for comparing the location information with the intended specific screen locations to determine whether the image features are displayed sufficiently closely to their intended specific screen locations; means for deriving adjustment information from the location information indicative of adjustments to the cathode ray tube display device causing the features of the image to be displayed more closely to their intended specific screen locations. In this way the objective data is interpreted and may be employed to adjust the image if adjustments are necessary.

According to another preferred feature of the invention the invention further comprises a display device, allowing either the image feature location information or the adjustment information to be displayed to an operator, who may then manually adjust the cathode ray tube display device aided by the objective image location information or the adjustment information.

According to another preferred feature of the invention the apparatus comprises means responsive to the adjustment information, for automated adjustment of the cathode ray tube display device. The entire alignment procedure may thereby be automated.

According to another preferred feature of the invention the specific screen locations follow the edges of the screen. The extremities of the image are adjusted thus assuring alignment of the image over the whole screen area.

According to another aspect of the invention there is provided a method for aligning the image in a cathode ray tube display device the method comprising the steps of:

(a) mutually disposing a cathode ray tube display device and apparatus according to the invention such that light from a corresponding predetermined screen location is incident on each light detector;

(b) displaying image features on the cathode ray tube display device, which image features are intended to be displayed at specific screen locations;

(c) determining from the signals given by the light detectors location information for said image features.

According to another preferred feature of the invention the method comprises the further steps of

(d) comparing the location information with the intended specific screen locations to determine whether the image features are displayed sufficiently closely to their intended specific screen locations;

(e) deriving from the image feature location information and the specific screen locations adjustment information for adjustments to the cathode ray tube display device causing the image features to be displayed more closely to their intended specific positions;

(f) making the adjustments to the cathode ray tube display device;

repeating the steps (b) to (f) until the the image features are displayed sufficiently closely to their intended specific screen locations.

According to another preferred feature of the invention the step of making the adjustments to the cathode ray tube display device includes the step of displaying location and/or adjustment information on a display device to an operator. The operator may either use the location information directly and make the adjustments to the cathode ray tube display device, for example on a trial and error basis, or he may use the adjustment information to determine the precise adjustments necessary. If the operator uses the location information directly then the invention still has the advantage that an objective basis is given for the end point of the alignment process.

According to another preferred feature of the invention the step of making the adjustments to the cathode ray tube display device comprises the step of making automated adjustments.

According to another preferred feature of the invention the method comprises the prior step of

adjusting the cathode ray tube display device so that the features of the image are approximately located at the locations indicated by marks on the sheet.

The image alignment apparatus may form part of a test rig in a production line for manufacturing cathode ray tube monitors. The monitor is brought onto the test rig, the mask is placed in front of each monitor unit, and data given by the mask is interpreted by software, either to give assistance to an operator in adjusting the cathode ray tube monitor or, alternatively to allow an automated, closed-loop adjustment system to be employed which directly utilises the data provided by the mask to make the necessary adjustments to the cathode ray tube. In either case an objective indication is given as to when criteria for correct alignment of the image are met.

Therefore, according to another aspect of the invention there is provided a test rig for image alignment of cathode ray tube display devices, the test rig comprising: apparatus according to the invention; means for bringing together the apparatus and the display device such that the sheet is disposed with respect to the cathode ray tube screen such that light from the corresponding predetermined screen locations is incident on each light detector.

Embodiments of the invention will be described below with reference to the following figures:

figure 1 shows a schematic arrangement of the mask, and in particular of the light detectors on the mask, in an embodiment of the invention,

figure 2 is a block diagram of the electronic interface between the light detectors and the computer in an embodiment of the invention,

figures 3a, 3b and 3c are flow diagrams showing the image alignment process used in the two embodiments of the invention,

figure 4 is a schematic diagram showing a test rig for cathode ray tube monitor alignment as part of a production process.

It should be noted that the cathode ray tube display devices referred to in this specification could be, for example, monitors for use in data processing systems or could equally well be television receivers or monitors for use in video applications or any other kind of cathode ray tube display device.

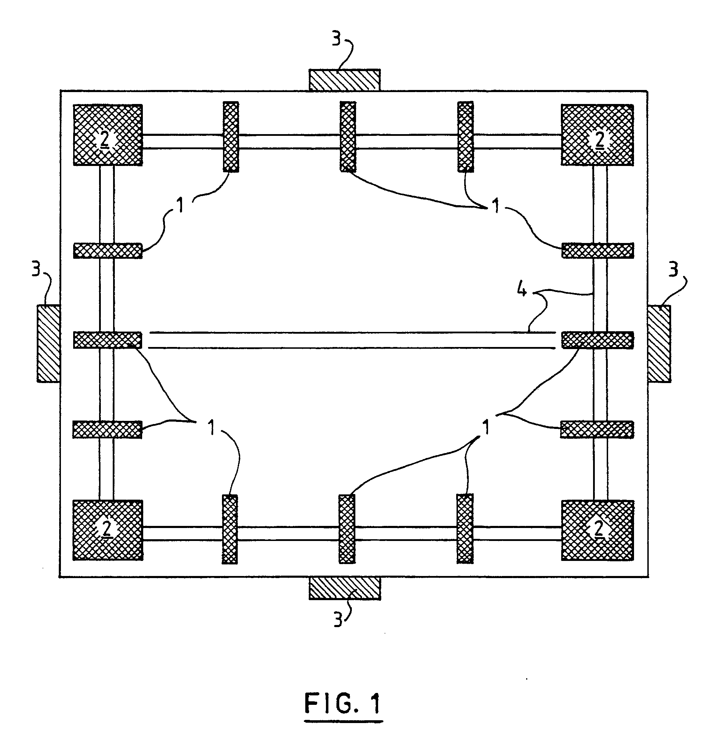

In the embodiments described here light detectors are mounted on a transparent sheet material to form a mask which is then mounted over the cathode ray tube screen. The arrangement of the light detectors on the mask in the embodiments of the invention is shown schematically in figure 1. The mask is fabricated from a transparent material to which are attached 12 light sensitive linear arrays (1) arranged around the nominal image periphery. The array axes are vertical at the top and bottom of the image and horizontal at the left and right edges of the image. Two-dimensional arrays of light detectors are placed at the four corners of the image (2) in order to provide both horizontal and vertical image position data. This arrangement of the mask is used to detect a feature, such as a line, located near the edge of an image. It allows each array to detect the image edge feature over a range of positions.

It should be noted that this arrangement of the light detectors is only one of many possibilities within the scope of the invention. It is not necessary for the light detectors to be mounted directly on the screen itself so long as they are mounted on a support structure such that light from predetermined locations on the screen may impinge upon them. It is possible, for example, that optical means, such as optical fibre transmission cable, may be used to guide the light from the screen locations to the light detectors. This is within the scope of the invention.

In the embodiments of the invention the mask is mounted to cover the entire cathode ray tube screen using the mounting points (3). Light from the screen falls directly on the light detectors. It is advantageous, therefore, in these embodiments for the mask to be as close as possible to the screen surface to avoid parallax effects.

The mask is also marked with tramlines (4) to define tolerances for an approximate manual pre-alignment of the monitor. These are also shown in figure 1.

In the embodiments the mask is half-silvered on its front surface to reflect ambient light whilst transmitting light emitted from the screen. This improves the signal to noise ratio by reducing the interference from ambient light.

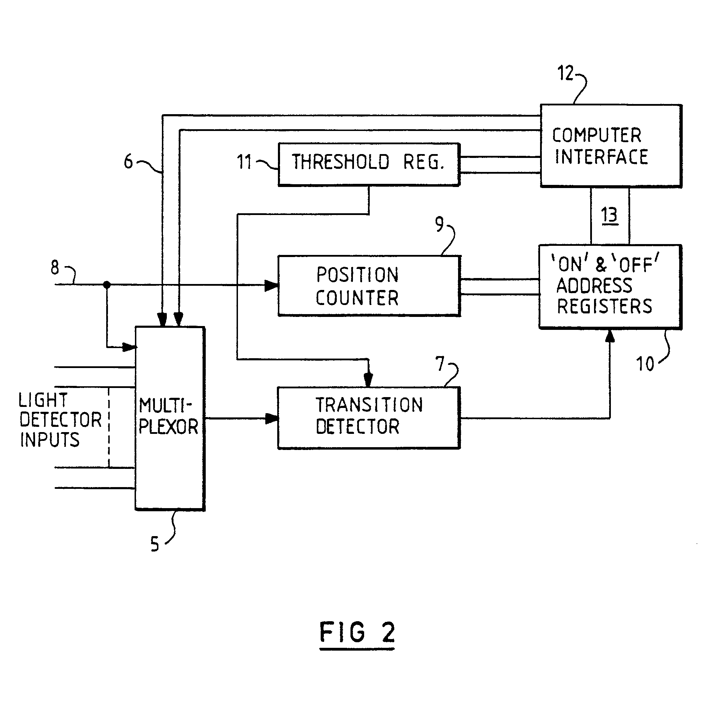

The light detectors are connected to an electronic interface which provides initial processing of the signal from the sensors. Figure 2 is a block diagram of the arrangement of the electronics in the interface for the embodiments described here.

Each array of detectors has a serial data shift connected to one input of a multiplexor (5), the software selects which array to sample via select lines (6) depending on the current measurement requirements.

Data from the selected array is clocked through the multiplexor (5) into a transition detector (7), the clock line (8) is also used to increment a position counter (9). The position counter (9) corresponds to the address (within the array) of the current data.

In these embodiments the image features to be detected by the mask consist of bright lines on a dark background. Hence, as data is shifted into the transition detector (7), the first change will be from "off" (dark) to "on" (bright line). The position counter (9) is incremented by the data clock (8) allowing the transition detector output to be used as a load pulse for the "on" address register (10). The data will continue to be sampled until the next change is detected. This will be "on" (bright line) to "off" (dark) and the corresponding address will be loaded into the "off" address register (10). Generally the point midway between the "on" and "off" addresses is used as the line position. These address registers (10) may be accessed by the computer interface (12) via a data bus (13), which is a simple bus allowing the control computer to read the contents of the "on" and "off" address registers.

The light detectors are at known positions on the mask, therefore the position of the image edge is known and the distortion of the image edge can be approximated.

The threshold register (11) contains a value loaded by the software which is used by the transition detector (7) to determine when to consider the detector data as a logical 1.

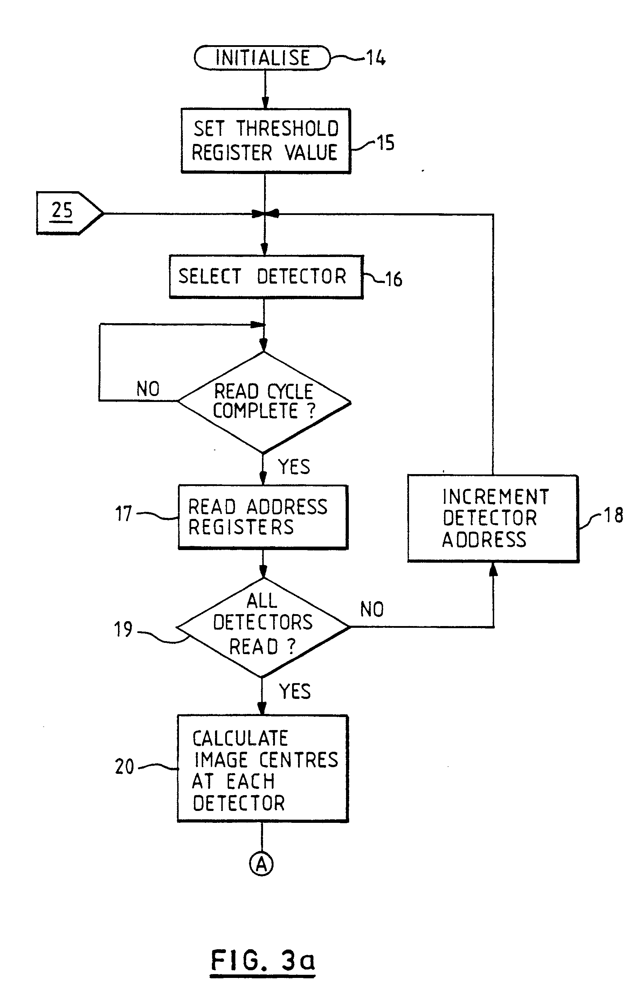

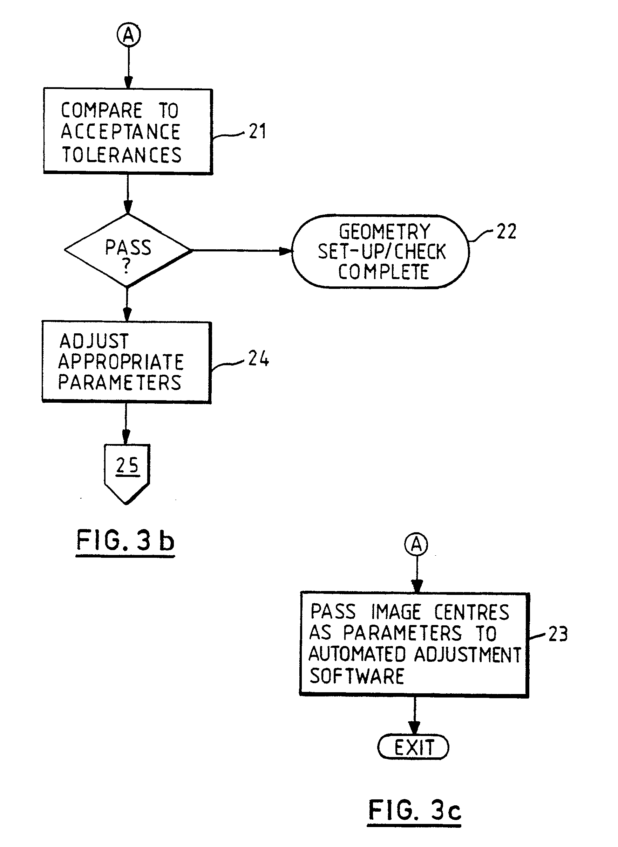

Figures 3a, 3b, and 3c are flow charts showing the alignment process used in embodiments of the invention.

Referring to figure 3a, after an initialisation step, 14, and the setting of the threshold register value, 15, a detector is selected, 16. When the detector has been read, ie the read cycle is complete, the control means reads the "on" and "off" address registers, 17. This cycle is repeated for all the detectors by incrementing the detector address, 18, until all the detectors have been read, 19. When all the detectors have been read the image centre is calculated for each detector, 20.

At point A there are two possibilities depending on whether the adjustment process is automated or involves the participation of an operator. In a first embodiment shown in figure 3b the image parameters are used by an operator to adjust the image. Adjustment may be made of parameters such as width, height, tilt, trapezium distortion, horizontal and vertical centring, horizontal pincushion or barrelling. How these adjustments are made by the operator depends in detail upon the cathode ray tube display device being aligned and will not be discussed herein.

The image parameters are compared, 21, with acceptance tolerances. If the image parameters are acceptable the geometry set-up is deemed to be complete. If the parameters are not acceptable the operator adjusts, 24, appropriate parameters and the process returns to point 25 in figure 3a. The image position is then redetermined. The process is repeated until the image position is correct.

An embodiment in which this process is automated is shown in figure 3c in this case the image parameters are passed, 23, to image adjustment software which calculates the adjustments necessary and makes them. Again the nature of the image adjustment software and how it calculates the adjustment information from the image location information supplied by the mask depends in detail upon the cathode ray tube display device concerned. For example, the adjustment information may be in the form of adjustments to analogue potentiometers which may be achieved by the use of robot means. Alternatively the adjustments may be to digital potentiometers and may be achieved by sending a suitable signal to the driver circuitry of the display device.

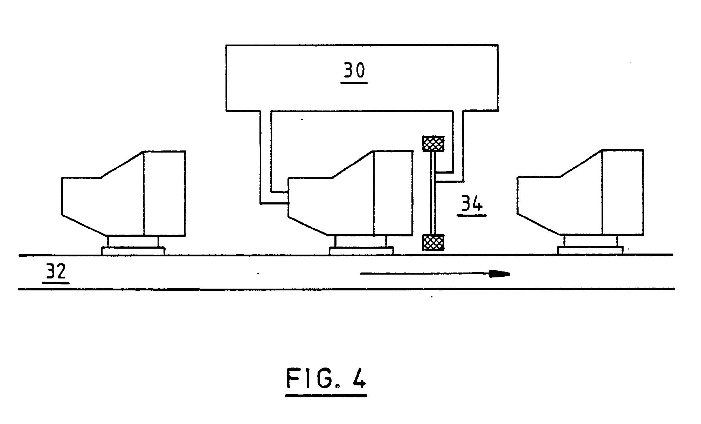

The mask and interface are used in a test rig for standard image alignment as part of a manufacturing process. This is illustrated schematically in figure 4. In this test rig a monitor unit, immediately after being fabricated on a production line (32), is brought onto the test rig (30) so that the mask (34) may be placed in front of the cathode ray tube screen. The monitor is powered up and an image displayed on the screen so that the edge of the image is visible. The mask is employed to give data regarding the location of the edge of the image with respect to the desired position for the image. These data are used to calculate the necessary adjustments to the monitor which cause the image to be nearer to its desired position. These adjustments are then made either manually by an operator or by automatic means. The process is repeated until the actual image position is sufficiently close to its desired position. When one monitor has been adjusted it is moved off the test rig and the next one is brought on and the process is repeated.

It will be appreciated that figure 4 is only a schematic representation of a test rig according to the invention with the monitors shown for clarity with their screens facing in the direction of the line. In practice it is more likely that the monitors be placed on the line with the screens facing outwards in order to minimise the movement of the mask.

The invention has the advantages over the prior art of low-cost and of reproducibility by the provision of objective data for monitor alignment. It enables a computer to be used to calculate the necessary adjustments to the display device. The invention provides for full automation of the alignment process, thereby allowing further cost and time savings.

**Claims**

1. Apparatus for image alignment in cathode ray tube display devices the apparatus comprising;
   at least one light detector;
   support structure for locating each light detector such that light from a corresponding predetermined screen location is incident thereon;
   each light detector producing a signal indicative of an image feature when the image feature is displayed at the predetermined screen location corresponding to the light detector.

2. Apparatus as claimed in claim 1 including a plurality of light detectors arranged to receive light from at least one linear array of predetermined screen locations, the linear array of screen locations being substantially perpendicular to an edge of the screen.

3. Apparatus as claimed in claim 1 or claim 2 including a plurality of light detectors arranged to receive light from at least one two-dimensional array of predetermined screen locations at or adjacent a corner of the screen.

4. Apparatus as claimed in any preceding claim wherein the support structure comprises a sheet carrying said light detectors and means for locating the sheet in a predetermined disposition with respect to the cathode ray tube screen.

5. Apparatus as claimed in claim 4 wherein the sheet is transparent and partially reflective.

6. Apparatus as claimed in claim 5 wherein the sheet further has marks thereon for initial approximate alignment of said image feature.

7. Apparatus as claimed in any preceding claim comprising;
   means for controlling said cathode ray tube display device to display image features which image features are intended for display at specific screen locations;
   means for receiving and responding to the signals given by the light detectors to determine from the signals screen location information for the displayed image features.

8. Apparatus as claimed in claim 7 comprising:
   means for comparing the location information with the intended specific screen locations to determine whether the image features are displayed sufficiently closely to their intended specific screen locations;
   means for deriving adjustment information from the location information indicative of adjustments to the cathode ray tube display device causing the features of the image to be displayed more closely to their intended specific screen locations.

9. Apparatus as claimed in claim 7 or claim 8 comprising a display device.

10. Apparatus as claimed any of claims 7 to 9 further comprising means responsive to the adjustment information, for automated adjustment of the cathode ray tube display device.

11. Apparatus as claimed in any of claims 7 to 10 in which the specific screen locations follow the edges of the screen.

12. A method for image alignment in cathode ray tube display devices the method comprising the steps of:

(a) mutually disposing a cathode ray tube display device and apparatus as claimed in any of claims 1 to 6 such that light from a corresponding predetermined screen location is incident on each light detector;

(b) displaying image features on the cathode ray tube display device, which image features are intended to be displayed at specific screen locations;

(c) determining from the signals given by the light detectors location information for said image features.

13. A method as claimed in claim 12 and further comprising the steps

(d) comparing the location information with the intended specific screen locations to determine whether the image features are displayed sufficiently closely to their intended specific screen locations;

(e) deriving from the image feature location information and the specific screen locations adjustment information for adjustments to the cathode ray tube display device causing the image features to be displayed more closely to their intended specific positions;

(f) making the adjustments to the cathode ray tube display device;

repeating the steps (b) to (f) until the the image features are displayed sufficiently closely to their intended specific screen locations.

14. A method as claimed in claim 13 wherein the step of making the adjustments to the cathode ray tube display device includes the step of displaying location and/or adjustment information on a display device to an operator.

15. A method as claimed in claim 13 or claim 14 wherein the step of making the adjustments to the cathode ray tube display device comprises the step of making automated adjustments.

16. A method as claimed in any of claims 12 to 15 wherein the apparatus utilised is the apparatus claimed in claim 6 and which further comprises the prior step of

adjusting the cathode ray tube display device so that the features of the image are approximately located at the locations indicated by marks on the sheet.

17. A test rig for image alignment of cathode ray tube display devices, the test rig comprising:

apparatus as claimed in any of claims 7 to 11;

means for bringing together the apparatus and the cathode ray tube display device such that the sheet is disposed with respect to the cathode ray tube screen such that light from the corresponding predetermined screen locations is incident on each light detector.

FIG. 1

FIG 2

FIG. 3a

9

EP 0 453 665 A1

FIG. 3 b

FIG. 3c

10

FIG. 4

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| X | US-A-4 897 721 (YOUNG et al.)<br>* Abstract; figure 1; column 3, lines 1-3; column 6, lines 43-69; column 7, lines 1-8 * | 1-3,7-9,12 | H 04 N 17/04 |
| Y | | 4-6,10, 11,13-17 | |
| Y | EP-A-0 204 112 (IBM CO.)<br>* Abstract; figure 1 * | 10,11, 13-17 | |
| Y | EP-A-0 135 642 (DEUTSCHE ITT INDUSTRIES GmbH)<br>* Figure 2; page 3, line 29 - page 4, line 21 * | 4-6 | |
| A | US-A-4 649 324 (GUERRA et al.)<br>* Abstract; figure 1 * | 4-6 | |
| A | US-A-4 684 982 (KRUFKA)<br>* Abstract; figure 1 * | 1 | TECHNICAL FIELDS SEARCHED (Int. Cl.5)<br><br>H 04 N |

The present search report has been drawn up for all claims

| Place of search | Date of completion of the search | Examiner |
|---|---|---|
| THE HAGUE | 08-10-1990 | GIANNOTTI P. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P0401)